# EUROPEAN PATENT APPLICATION

(11) **EP 1 950 487 A2**
(43) Date of publication of application: **30.07.2008**
(21) Application number: 06847052.5
(22) Date of filing: 17.11.2006
(51) Int. Cl.: F16L 55/30, B08B 17/04

(54) **DUCT CLEANING SYSTEM**

(30) Priority: 18.11.2005 ES 200502839; 13.07.2006 ES 200601875
(71) Applicant: Campuzano Talasac, Javier, 48014 Bibao Vizcaya (ES)
(72) Inventor: Campuzano Talasac, Javier, 48014 Bibao Vizcaya (ES)
(74) Representative: Carvajal y Urquijo, Isabel
(86) International application number: PCT/ES2006/000637
(87) International publication number: WO 2007/057491

(57) **Abstract**

The invention relates to a duct cleaning system comprising a tubular sleeve (3)
and an apparatus for inserting the sleeve (3) into the duct (20). The aforementioned apparatus includes a driving disk (1), to which the tubular sleeve (3) is fixed and at least one guide body (2) having a smaller diameter than the inside diameter of the duct. One of the bases of the guide body (2) is connected axially to the driving disk (1) while the opposing base is provided with means (4) for connecting a cable in order to drive the assembly. In addition, the guide body (2) is fitted with a plurality of supports wheels (5,6) having axes that are perpendicular to the axis of the guide body (2).

## Description

### Field of the Invention

The present invention relates to a circulation duct cleaning system, for example, for air conditioning circulation ducts, for fume, gas, dust, liquids, solid discharge ducts, etc.

More particularly, the present invention relates to a system based on a tubular sleeve with a thin flexible wall which can be inserted into the mentioned ducts as well as an apparatus for inserting said sleeve along the duct, said sleeve being intended to facilitate cleaning said duct.

### Background of the Invention

The ducts for the purpose set forth require periodic cleaning. In some cases due to hygiene needs, to prevent disease contagion risks, and in other cases to eliminate the deposits occurring on the walls of the ducts when the latter are intended for, for example, kitchen gas; fume, dust discharge, etc.

In liquid, solid, gas and fume extract ducts, the waste carried by them is deposited on the inner surface of the ducts. To prevent this risk, the ducts are periodically cleaned "in situ" by means of products of a chemical nature, the mentioned deposits, together with the used cleaning products, being discharged into drainage pipes. This system therefore requires the use of cleaning products, it does not collect the waste deposits and furthermore requires a large amount of labor.

As a solution to the problem set forth, sleeves which can be inserted into the discharge duct to be cleaned are used, which duct generally has a circular section, the sleeve therefore having the same section, and a slightly smaller diameter than that of the duct.

The deposits caused by the circulation of liquids, solids, fumes or gases through the duct thus occur on the inner surface of the sleeve, such that when it is foreseen that the deposits reach a certain value, the sleeve and thus the deposits produced are removed and subsequently said sleeve will be cleaned in suitable installations, in which the waste deposits can be removed and collected to subsequently treat or recycle them.

The problem occurs in the operations for inserting the sleeve through the duct in which it is to be installed, especially when the ducts have changes of direction in their path. Manual placement is complicated because the section to be inserted is frequently jammed when there are changes of direction due to friction with the inner surface of the duct, due to getting caught in the joints and overhaul hatches of said duct, etc.

### Description of the Invention

The object of the present invention is to eliminate the problems set forth by means of a duct cleaning system which, by starting from a sleeve with a particular configuration to be inserted by means of an apparatus designed for such purpose, allows inserting and removing the sleeve from the duct in a simple and effective manner.

To that end, the mentioned apparatus is fixed in one of the bases or end sections of the sleeve and is useful as a means for driving said sleeve along the duct, eliminating or reducing the risks of jamming, even in sections of changes of direction.

Said apparatus can prevent the end section of the sleeve from getting caught in the inner surface of the duct, this apparatus preferably being manually driven for its movement through the duct, for example, by means of a driving cable which is connected at one end to the apparatus and is removed at the opposite end through a distant section of the duct.

The mentioned apparatus is formed by a driving disk and at least one guide body. The driving disk is the element to which the tubular sleeve is fixed and has a diameter approximately equal to that of said sleeve, i.e. slightly smaller than the inside diameter of the duct.

The guide body or bodies forming part of the apparatus will have a circular contour, having a smaller diameter than the inside diameter of the tube. This guide body can be connected axially to the driving disk at one of the bases of the body and has at the opposing base means for connecting a cable in order to drive the assembly. When the apparatus is formed by more than one guide body, the driving disk will be connected to one of the end guide bodies, whereas the cable in order to drive the assembly will be connected to the other end guide body.

Each guide body forming part of the apparatus of the invention is fitted with a series of support wheels having axes that are perpendicular to the axis of the body, which wheels project from the periphery of said body and determine a contour equal to the inner contour of the duct, for their support thereon. The wheels will preferably be assembled on each body with the capacity to slide in a radial direction between an inner position, in which they determine a contour equal to or smaller than the inner contour of the duct, and an outer position, in which they determine a contour having a larger diameter than the inside diameter of the duct. The wheels are constantly driven towards the outer position by means of a spring. This system allows ensuring the contact of the wheels with the inner surface of the duct during the operation for assembling the sleeve.

The axes of the wheels of the guide body or bodies can be located in two different planes that are perpendicular to the axis of the body.

The apparatus can include a single guide body which is coaxially traversed by a duct through which there passes a cable which is connected to the driving disk.

The apparatus can preferably include three independent and aligned guide bodies, two end bodies and a central body, one of the end bodies of which has the driving disk fixed thereto, whereas the driving cable is connected to the opposite body. The three disks bear a series of support wheels, as has been described, and every two consecutive bodies will be joined to one another by means of a coaxial universal joint. The three bodies will further be joined by means of two groups of three arms, the three arms being in each group consecutively linked to one another at their respective ends and each end arm being linked at its free end to the adjacent end arm, whereas the central arm is linked at a mid-point to the central body.

With this constitution the end arms act as connecting rods and the central arm as a lever linked at its mid-point. With this constitution, the angle formed between the three disks can vary, but the central disk always being located in coincidence with the bisector of the angle formed by the end disks.

This arrangement facilitates the progress of the apparatus through the bends and changes of direction of the duct.

The sleeve can in turn have a slightly smaller inner section than that of the duct, the mentioned sleeve having a thin impermeable wall and being fixed, through its end sections, to the duct with releasable means configured to allow the release of said sleeve and its removal through one of the end sections of the duct.

The wall of the sleeve will preferably be reinforced by an armoring, for example, based on a wire of a steel nature wound in a helical manner with a slightly smaller, diameter than that of the discharge duct in which it is installed, this wire being fixed to the contour of the wall of the tubular sleeve, along the entire contour.

The wall of the sleeve can be advantageously formed based on fiberglass, whereby a tight and non-combustible element with a high resistance to abrasive agents, even at high temperatures, is obtained for the cleaning operations to which it may be subjected. It is furthermore achieved that the sleeve, with the constitution set forth, is extremely lightweight, flexible and pliable for its installation through a duct, even though the latter may have curves or changes of direction.

The sleeve can be fixed to the duct by any known system, said fixing always being carried out on the end sections of said duct between which the sleeve runs.

The system of the invention allows installing the sleeve in already installed ducts and also inside new installation ducts, in which the sleeve could be included.

### Brief Description of the Drawings

The constitution and features of the apparatus of the invention can be better understood, made with reference to the attached drawings, in which a non-limiting embodiment is shown.

In the drawings:
Figure 1 is a side elevational view of an apparatus forming part of the system object of the invention, including a single guide body.
Figure 2 is a front elevational view of the apparatus of the invention according to direction A-A of Figure 1.
Figure 3 shows a perspective view of an apparatus formed by three guide bodies.
Figure 4 is a front elevational view of the apparatus of three bodies according to direction A of Figure 3.
Figure 5 is a side view of the apparatus of Figure 3.
Figure 6 schematically shows the progress of the apparatus of Figure 3 through a bend of a duct.
Figure 7 shows a perspective view of a segment isolated from the rest of the installation of a duct, forming part of the cleaning system of the invention.
Figure 8 shows a perspective view of a possible constitution of the sleeve used in the cleaning system of the invention.

### Detailed Description of Embodiments of the Invention

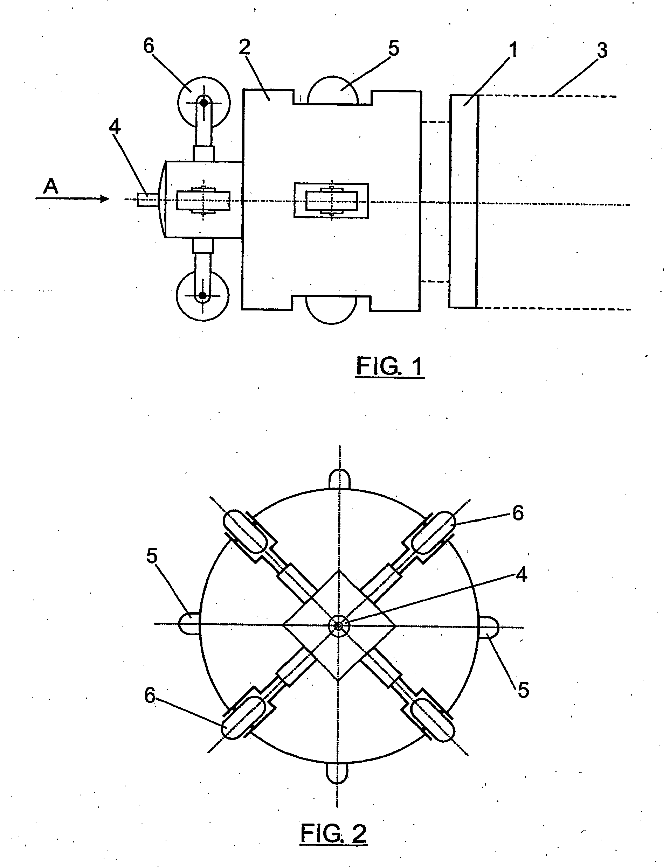

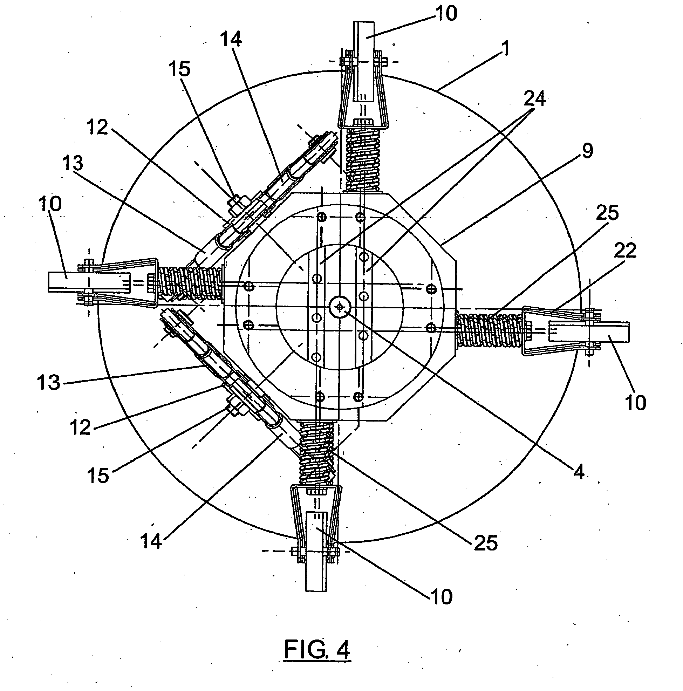

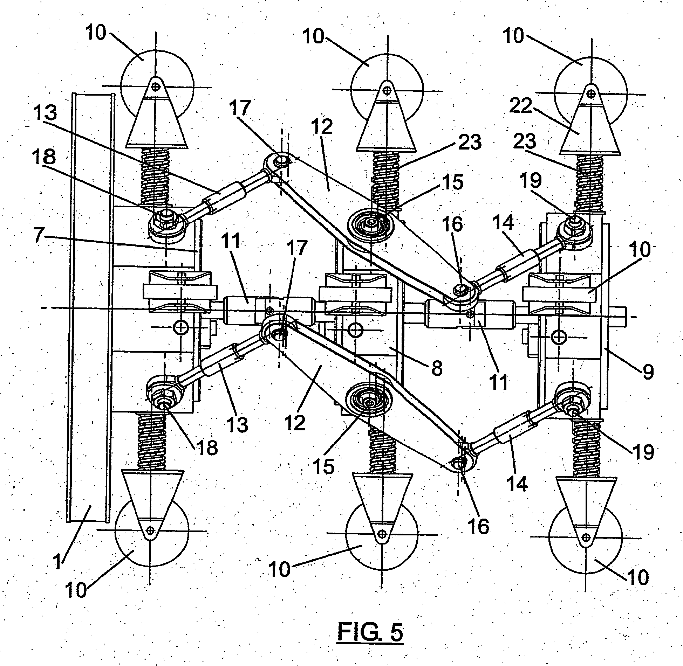

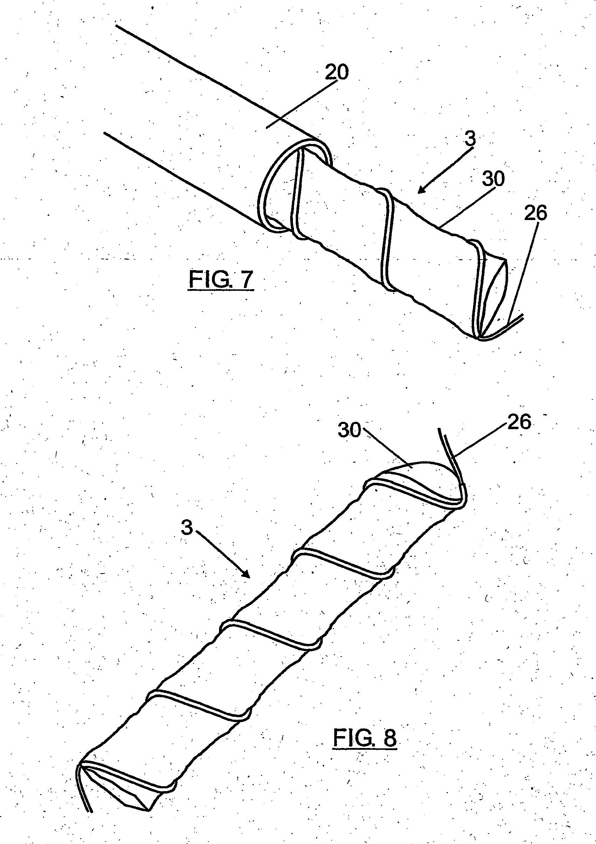

The duct cleaning system object of the present invention is formed by a sleeve 3 shown in Figures 7 and 8 and by an apparatus for inserting the sleeve 3 into the duct 20 shown, in its different embodiments, in Figures 1 to 6.

In a first embodiment of the invention, shown in Figures 1 and 2, the mentioned apparatus comprises a driving disk 1 and a single guide body 2.

The tubular sleeve will be fixed to the guide body 2 through one of its end sections by means of any known fixing system without the nature therefore determining the object of the present invention.

The guide body 2 has a smaller diameter than the inside diameter of the duct 20. The body 2 and the driving disk 1 are connected axially to one another on one of the bases of the body 2. On the opposite side, said body has means 4 for connecting a cable in order to drive the assembly.

In the example shown in Figures 1 and 2, the body 2 is fitted with two series of wheels 5 and 6 the axes of which are located in two different planes that are perpendicular to the axis of the body and distanced from one another. However, the body 2 could have only one group or set of wheels. The wheels 5 and 6 project from the periphery of the body and determine a contour which will be equal to the inner contour of the assembly in which the sleeve 3 is to be installed, for their support on the inner surface thereof.

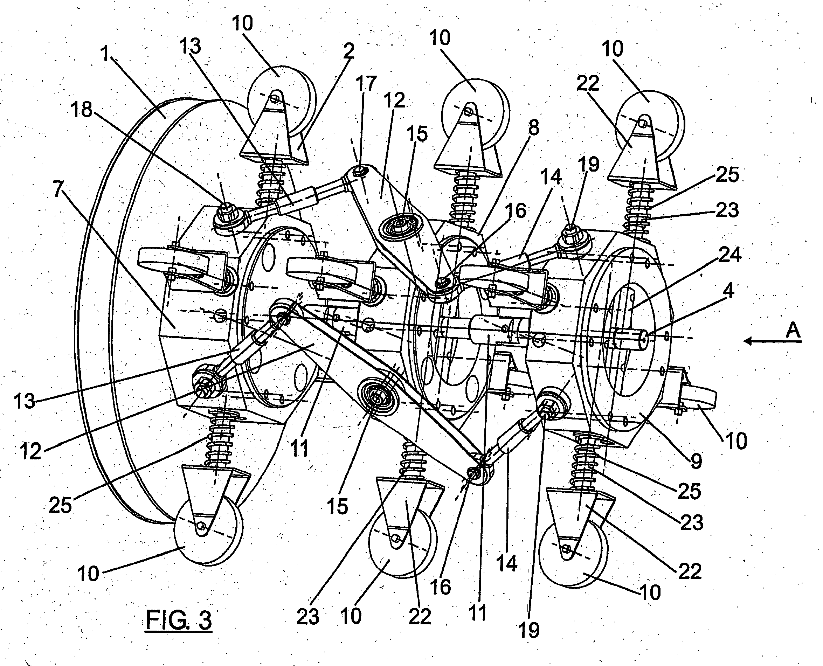

The apparatus shown in Figures 3, 4 and 5, corresponding to a second embodiment, includes a driving disk 1 and three guide bodies with reference numbers 7, 8 and 9. The driving disk 1 is connected to one of the end bodies 7, whereas the other end body 9 has means 4 for connecting the driving cable.

Each of the bodies 7, 8 and 9 has an assembly of wheels 10 which will project from the periphery of the driving disk 1 and will determine a contour-equal to the inner contour of the duct through which the apparatus is to be inserted.

Every two consecutive bodies are joined to one another by means of a coaxial universal joint 11. The three bodies are further joined by means of two assemblies of linked arms. Each of these assemblies is formed by a central arm 12 and two end arms 13 and 14. The central arm 12 is linked at a mid-point 15 to the central body 8, whereas at its ends it is connected to the adjacent ends of the arms 13 and 14 by means of linkages 16 and 17. At the free end, the arms 13 and 14 are connected to the bodies 7 and 9 through linkages 18 and 19. The other assembly of three arms is located behind the bodies 7, 8 and 9, as can be partially seen in Figure 3.

In each assembly of arms, the end arms 13 and 14 act as linkage connecting rods between the central arm 12 and the end bodies 7 and 9, respectively.

In the described arrangement, by means of the universal joints 11 consecutively connecting the three bodies 7, 8 and 9 and the two assemblies of arms 12, 13 and 14 described, the three bodies can slightly pivot in relation to one another, such that the angle formed between the three, bodies can vary, the central body always being located in coincidence with the bisector of the angle formed by the end bodies 7 and 9.

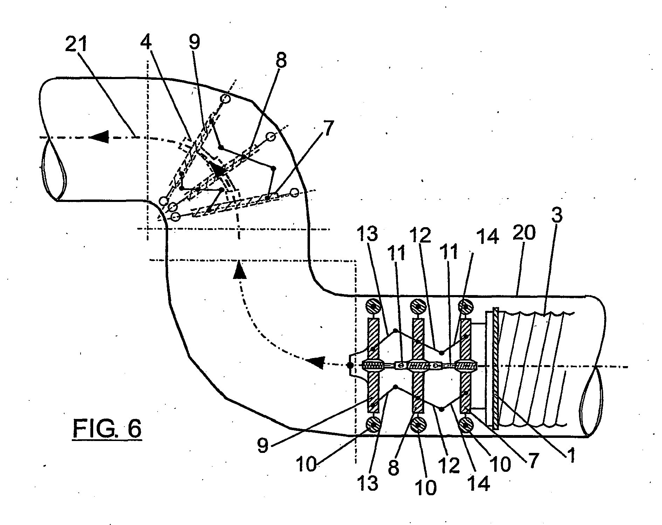

This feature is observed in the diagram of Figure 6, showing a sectioned duct 20 through which the apparatus of Figure 3 is inserted, which apparatus is formed by the three bodies 7 and 8 and the driving disk 1 which is fixed by any system to the free base of the body 2.

When the apparatus moves along a straight segment of the duct 20, the wheels 10 of the three bodies will be supported on the inner surface of the duct 20. The universal joints 11 will be aligned and the bodies 7, 8 and 9 will be in a position parallel to one another. The two assemblies of arms 12, 13 and 14 are in a considerably parallel position.

When the apparatus moves through a bend or segment with a change of direction, the angle formed between the bodies 7, 8 and 9 varies, the central body 8 always being maintained in the bisector of the angle defined by the end bodies 7 and 9.

The universal joints form the necessary bendings and one of the assemblies of arms 12, 13 and 14 is partially extended or unfolded, whereas the other assembly of arms 12, 13 and 14 is partially folded. The wheels 10 maintain their contact with the inner surface of the duct 20. The movement of the apparatus through segments that are bent or have a change of direction is thus facilitated, without there being jamming, since the driving disk, to which the sleeve 3 is connected, is fixed to the body 7 of the apparatus.

A driving cable 21 will be connected to the means 4 of the body 9, which cable will be removed through a distant section or opening of the duct 20.

The wheels 10 can be assembled in each body with the capacity to slide in a radial direction in relation to such body between an inner position, in which they determine a contour equal to or smaller than the inner contour of the duct 20 though which the apparatus is to be inserted, and an outer position, in which they determine a contour having a larger diameter than the inside diameter of the duct 2. To that end, the wheels 10 can be assembled, as observed in Figure 3, in supports 22 from which a pin 23 projects externally and in a position perpendicular to the axis of the wheel 10, which pin can be partially introduced into a bushing 24 fixed to the corresponding body. Around the pin 22, there is assembled a compression spring 25 constantly driving the pin 23 and wheel 10 towards the aforementioned outer position, a position from which the pin 23 will be prevented from moving towards the outside in relation to the bushing 24.

As can be seen, the apparatus of the invention can include, in addition to the driving disk 1, one or more guide bodies, each of which is provided with one or more sets of wheels.

Figure 7 shows a segment of a duct 20 for the liquid, solid, gas and fume discharge of a kitchen, for example.

To clean this duct, according to the invention, a tubular sleeve 3 having a slightly smaller contour than of the duct 20 is inserted into such duct by means of the mentioned apparatus. In the example shown in the drawing, the duct 20 has a circular section, the sleeve 3 having this same section, with a slightly smaller diameter than that of the duct 20.

The sleeve 3 comprises a thin flexible wall 30 which will have an impermeable nature, being able to be formed based on fiberglass, for example.

As can be seen in Figures 7 and 8, this wall is reinforced by means of an armoring formed by a wire 26 wound in a helical manner, with a diameter which will be slightly smaller than the inside diameter of the discharge duct 20.

The wire 26 wound in a helical manner will be attached in its entire length to the wall 30 of the sleeve. The wire 26 will have a steel nature and a small diameter, such that the sleeve 3 is extremely lightweight, flexible and pliable so that it can be easily inserted through ducts 20, even though the latter have curves or changes of direction.

The sleeve 3 will be fixed to the duct 20 in the end sections of the segment along which said sleeve runs. This fixing is carried out such that it can be easily eliminated or released, for the purpose of being able to remove the sleeve 3 when desired. This fixing has not been shown in the figures.

This operation will be carried out when deposits that must be cleaned have occurred on the inner surface of the sleeve 3. The removed sleeve 3, together with the deposits adhered to the inner surface thereof, will be subjected to cleaning in a suitable installation, where such deposits can be collected to recycle them or eliminate them in the most suitable manner, without the risk of them causing environmental pollution.

Once clean, the sleeve 3 can be installed again in the duct 20, its end sections being fixed to the sections of the duct 20 between which said sleeve must run.

With the system of the invention, ducts 20 will be quickly cleaned, since it will be enough to remove the sleeve 3. The products adhered to the sleeve can furthermore be collected in order to subsequently recycle them.

In the case of ducts of air conditioning installations, the sleeve 3 can be subjected to the necessary treatments to maintain the necessary hygienic conditions.

Although in the example shown in the drawings the system has been applied to a duct 20 having a circular section, it could likewise be applied to ducts with other sections, accordingly adapting the section of the sleeve 3.

## Claims

1. A duct cleaning system comprising a tubular sleeve (3) and an apparatus for inserting said sleeve (3) into the mentioned duct (20), **characterized in that** the mentioned apparatus comprises a driving disk (1), to which the tubular sleeve (3) is fixed, and at least one guide body (2) having a smaller diameter than the inside diameter of the duct, which guide body (2) can be connected axially to the driving disk
(1) at one of the bases of the guide body (2) and has at the opposing base means (4) for connecting a cable in order to drive the assembly, which guide body (2) is fitted with a plurality of support wheels (5, 6) having axes that are perpendicular to the axis of the guide body (2), which wheels project from the periphery of said body and determine a contour equal to the inner contour of the duct (20), for their support thereon.

2. The cleaning system according to claim 1, **characterized in that** the apparatus for inserting the tubular sleeve (3) comprises a single guide body (2).

3. The cleaning system according to claim 1, **characterized in that** the apparatus for inserting the tubular sleeve (3) comprises two assemblies of wheels (5) and (6), the axes of which are located in two different planes that are perpendicular to the axis of the guide body (2).

4. The cleaning system according to claim 1, **characterized in that** the apparatus for inserting the tubular sleeve (3) comprises three independent and aligned guide bodies (7, 8, 9), two end bodies (7) and (9) and a central body (8), the driving disk (1) being fixed to one of the end bodies (7), whereas the driving cable (21) is connected to the other end body (9); the three bodies bearing a series of support wheels (10) and every two consecutive bodies being joined to one another by means of a coaxial universal joint (11) and the three bodies being joined by means of dos assemblies of arms, each assembly having three arms consecutively linked to one another at their respective ends and each end arm (13, 14) being linked at its free end to the adjacent end arm (7, 9), whereas the central arm (12) is linked at a mid-point to the central body (8), such that angle formed between the three bodies (7, 8, 9) can vary, the central body (8) always being located in coincidence with the bisector of the angle formed by the end bodies (7, 9).

5. The cleaning system according to claims 1 to 4, **characterized in that** the mentioned wheels (5, 6; 10) are assembled in each guide body (2;, 7, 8, 9) with the capacity to slide in a radial direction between an inner position, in which they determine a contour equal to or smaller than the inner contour of the duct (20), and an outer position, in which they determine a contour having a larger diameter than the inner contour of the duct (20), said wheels (5, 6; 10) being constantly driven towards the outer position by means of a spring (25).

6. The duct cleaning system according to the previous claims, **characterized in that** the sleeve (3) has a slightly smaller inner section than that of the duct (20), the mentioned sleeve (3) having a thin, impermeable and flexible wall (30) and being fixed through its end sections to the duct with releasable means configured to allow the release of said sleeve (3) and its removal through one of the end sections of the duct (20).

7. The system according to claim 6, **characterized in that** the wall (30) of the tubular sleeve (3) is reinforced by means of an armoring based on a wire (26) of a steel nature wound in a helical manner with a slightly smaller diameter than that of the discharge duct (20) and fixed around the contour of the wall (30) of the sleeve (3).

8. The system according to claim 7, **characterized in that** the wall (30) of the sleeve (3) is of fiberglass.
